# EUROPÄISCHE PATENTSCHRIFT

(11) **EP 1 740 430 B1**
(45) Veröffentlichungstag und Bekanntmachung des Hinweises auf die Patenterteilung: **07.11.2007**
(21) Anmeldenummer: 05740071.5
(22) Anmeldetag: 15.04.2005
(51) Int. Cl.: B60T 13/74

(54) **VERFAHREN UND REGELSYSTEM ZUM AUFBRINGEN DEFINIERTER SPANNKRÄFTE**
METHOD AND CONTROL SYSTEM FOR APPLYING DEFINED TENSILE FORCES
PROCEDE ET SYSTEME DE REGULATION POUR APPLIQUER DES FORCES DE TENSION DEFINIES

(30) Priorität: 17.04.2004 DE 102004018729; 11.03.2005 DE 102005011267
(43) Veröffentlichungstag der Anmeldung: 10.01.2007
(73) Patentinhaber: Continental Teves AG & Co. oHG, 60488 Frankfurt (DE)
(72) Erfinder: MARON, Christof, 65779 Kelkheim (DE)
(86) Internationale Anmeldenummer: PCT/EP2005/051671
(87) Internationale Veröffentlichungsnummer: WO 2005/100114

(56) Entgegenhaltungen:
- WO-A-01/68428
- DE-A1- 10 205 013
- DE-A1- 19 730 094

## Beschreibung

Die Erfindung betrifft ein Verfahren zum Aufbringen definierter Spannkräfte bei einer mittels eines Aktuators elektrisch betätigbaren Bremse mit einer ersten Reibfläche (Reibbelag) sowie einer zweiten Reibfläche (Bremsscheibe), zwischen denen ein Lüftspiel vorgesehen ist, bei der das Anlegen der ersten Reibfläche an die zweite Reibfläche ermittelt wird, bei der ein Zusammenhang zwischen der Aktuatorposition und der Spannkraft besteht, bei dem mittels eines Spannkraftsensors sowie eines Lagesensors gemessene Werte der Spannkraft sowie der Aktuatorposition ermittelt werden, wobei ein Schätzwert der Aktuatorposition gebildet wird, der dem Anlegen der ersten Reibfläche an die zweite Reibfläche entspricht.

Ein Verfahren sowie ein Regelsystem zum Aufbringen definierter Spannkräfte bei einer mittels eines Elektromotors über ein Untersetzungsgetriebe betätigbaren Scheibenbremse sind aus der internationalen Patentanmeldung WO 01/68428 bekannt. Das Besondere an dem vorbekannten Verfahren besteht darin, dass der vorhin erwähnte Zusammenhang zwischen der Aktuatorposition und der Spannkraft durch ein mathematisches Modell, vorzugsweise durch ein Polynom zweiter Ordnung dargestellt wird. Bei der Realisierung des bekannten Verfahrens erfolgt jedoch die Aktualisierung des Schätzwertes der Aktuatorposition, der als Lagesemsor-offsetwert bezeichnet wird, nicht kontinuierlich, sondern zeitverzögert, nämlich erst nach jedem erneuten Schätzen der unbekannten Parameter des mathematischen Modells.

Es ist daher Aufgabe der vorliegenden Erfindung, ein Verfahren sowie ein Regelsystem vorzuschlagen, die es ermöglichen, laufend aktuelle Schätzwerte ohne Zeitverzögerungen zur Verfügung zu stellen, um insbesondere den Anlegepunkt auch dann nachzuführen, wenn die Bremsbeläge während einer Bremsung nicht vernachlässigbar verschleißen, was z.B. bei sehr hohen Temperaturen der Bremse auftreten kann.

Die Aufgabe wird verfahrensmäßig dadurch gelöst, dass
a) die Istwerte der Aktuatorposition (ϕₘₑₛₛ) und der Spannkraft (Fₘₑₛₛ) laufend tiefpassgefiltert werden,
b) zeitliche Ableitungen (ϕ_{mess, filtp,} F_{mess,filtp}) der gefilterten Werte der Aktuatorposition (ϕ_{mess,filt}) und der Spannkraft (F_{mess,filt}) ermittelt werden,
c) ein Quotient Q = F_{Mess,filtp}/ϕ_{Mess,filtp} gebildet wird,
d) der Schätzwert (ϕ_{0,schätz}) der Aktuatorposition nach der Formel (ϕ_{0,schätz} = ϕ_{Mess, filt} - F_{Mess,filt}/Q berechnet wird,
e) der Schätzwert (ϕ_{0,schätz}) einer Plausibilitätsprüfung unterworfen wird und
f) der plausibilisierte Schätzwert (ϕ₀,ₚₗₐᵤ) in einem Tiefpassfilter n-ter Ordnung gefiltert wird, dessen Ausgangsgröße dem Wert (ϕ₀) entspricht.

Zur Konkretisierung des Erfindungsgedankens ist vorgesehen, dass der berechnete Schätzwert nur dann als plausibler Schätzwert angesehen wird, wenn der diesem Schätzwert zugeordnete gefilterte Spannkraft-Istwert innerhalb eines vordefinierten Intervalls **Fₘᵢₙ < F_{Mess,filt} < Fₘₐₓ** liegt. Dadurch kann zum einen vermieden werden, dass Störungen überproportional in den Schätzwert eingehen **(F_{Mess,filt} < Fₘᵢₙ)**, zum anderen, dass der Schätzwert wegen des linearen Ansatzes zu große Abweichungen vom realen Anlegepunkt aufzeigt **(F_{Mess,filt} > Fₘᵢₙ)**. Bei einer Weiterbildung des erfindungsgemäßen Verfahrens werden die Schätzwerte als unplausibel angesehen und nicht berücksichtigt, wenn der Quotient Q negativ ist, da negative Werte physikalisch nicht vorkommen dürften und somit nur auf Störungen auf den erfassten Signalen zurückzuführen sind.

Die Tiefpassfilterung, insbesondere aber die Bildung der zeitlichen Ableitungen der gefilterten Werte der Aktuatorposition und der Spannkraft beruhen vorteilhaft auf einem Berechnungsalgorithmus, der eine Approximation der letzten 2n+1 Messwerte mittels eines Polynoms 2. Ordnung (f(t) = at²+bt+c) verwendet, bei der die gefilterten Werte und ihre zeitlichen Ableitungen den Parametern des Polynoms an der Stelle n+1 entsprechen. Dieses Vorgehen wird bei jedem neu hinzugekommenen Messwert wiederholt. Die Ableitungssignale sind jeweils um n Zeitpunkte zum aktuellen Messwert verzögert, wenn 2n+1 Messpunkte für die Approximation verwendet werden. Bei der Verwendung von 2n+1 = 3 Messpunkten werden die das Polynom beschreibenden Parameter a,b, und c ohne Näherung bestimmt, so dass noch keine Filterung der Messwerte vorliegt, sondern nur eine Berechung der 1. Ableitung (f'(t) = 2at+b) und 2. Ableitung (f"(t) = 2a) möglich ist. Bei Verwendung von mehr als 3 Messwerten (z.B. 5,7,9,...) kommt es zu einer zusätzlichen Filterung der Messwerte, da die Parameter a,b,c dann mit Hilfe der Methode der kleinsten Quadrate ermittelt werden.

Das erfindungsgemäße Regelsystem zur Durchführung des vorhin erläuterten Verfahrens besteht im wesentlichen aus
a) einem ersten Regler (Kraft-Wegregler), dem als Eingangsgrößen einem Spannkraft-Sollwert und einem Spannkraft-Istwert repräsentierende Signale sowie einem Aktuatorposition-Istwert (repräsentierende Signale zugeführt werden und dessen Ausgangsgröße einem Aktuatordrehzahl-Sollwert entspricht,
b) einem dem ersten Regler nachgeschalteten zweiten Regler (Drehzahlregler), dem als Eingangsgrößen den Aktuatordrehzahl-Sollwert und einen Aktuatordrehzahl-Istwert repräsentierende Signalen zugeführt werden und dessen Ausgangsgröße einem Aktuatordrehmoment-Sollwert entspricht, sowie
c) einem dem zweiten Regler nachgeschalteten dritten Regler (Stromregler), dem als Eingangsgrößen den Aktuatordrehmoment-Sollwert und einen Istwert des dem Aktuator zuzuführenden Stromes repräsentierende Signale zugeführt werden und dessen Ausgangsgröße eine Stellgröße zur Einstellung des Istwerts des dem Aktuator zuzuführenden Stromes darstellt, wobei
d) wobei ein Anlegepunktidentifikationsmodul vorgesehen ist, dem als Eingangsgrößen den Istwert der am Aktuator gemessenen Position sowie den Istwert der am Aktuator gemessenen Betätigungskraft repräsentierende Signale zugeführt werden und dessen Ausgangsgröße einen Schätzwert der Aktuatorposition darstellt, der dem Anlegen der ersten Reibfläche an die zweite Reibfläche entspricht, wobei das den Aktuatorposition-Istwert repräsentierende Signal durch Subtraktion des Schätzwertes von dem Wert der gemessenen Aktuatorposition gebildet wird.

Das erfindungsgemäße Regelsystem zeichnet sich vorzugsweise dadurch aus, dass das Anlegepunktidentifikationsmodul Tiefpassfilter n-ter Ordnung zur Tiefpassfilterung der den Istwert der am Aktuator gemessenen Position sowie den Istwert der am Aktuator gemessenen Betätigungskraft repräsentierenden Signale aufweist, denen Differenzierer zur Bildung der zeitlichen Ableitung der gefilterten Signale der Aktuatorposition (ϕ_{mess,filt}) und der Spannkraft (F_{mess,filt}) nachgeschaltet sind, deren Ausgangsgrößen (ϕ_{mess,Filtp,} F_{Mess,filtp}) einem ersten Multiplikationsmodul zur Berechnung eines Quotienten Q = F_{Mess,filtp}/ϕ_{Mess,filtp} zugeführt werden, dem ein zweites Multiplikationsmodul nachgeschaltet ist, in dem der gefilterte Wert der Spannkraft (F_{mess,filt}) durch den Quotienten Q geteilt wird und dem ein Additionssmodul nachgeschaltet ist, in dem der Schätzwert (ϕ_{0,schätz}) der Aktuatorposition nach der Formel ϕ₀ = ϕ_{mess,filt} - F_{mess,filt}/Q berechnet wird.

Eine vorteilhafte Weiterbildung des erfindungsgemäßen Regelsystems besteht darin, dass dem Additionssmodul ein Plausibilisierungsmodul nachgeschaltet ist, in dem der geschätzte Schätzwert mit den gefilterten Werten der Aktuatorposition und der Spannkraft sowie deren zeitlichen Ableitungen einer Plausibilitätsprüfung unterworfen wird.

Dem Plausibilisierungsmodul ist bei einer vorteilhaften Weiterbildung des erfindungsgemäßen Regelsystems ein Tiefpassfilter n-ter Ordnung nachgeschaltet, in dem der geschätzte plausibilisierte Schätzwert zur Bildung des Werts der Aktuatorposition, der dem Anlegepunkt entspricht, einer Tiefpassfilterung unterworfen wird.

Weitere Einzelheiten, Merkmale und Vorteile der Erfindung gehen aus der nachfolgenden Beschreibung eines Amsführungsbeispiels unter Bezugnahme auf die beiliegende Zeichnung hervor, die eine Ausführung eines Regelkreises zur Durchführung des erfindungsgemäßen Verfahrens zeigt.

In der Zeichnung zeigen:
- Fig. 1: eine Ausführung eines Regelsystems zur Durchführung des erfindungsgemäßen Verfahrens,
- Fig. 2: den Aufbau eines im Regelsystem gemäß Fig. 1 verwendeten Anlegepunktidentifikationsmoduls, und
- Fig. 3: eine Kennlinie zur Veranschaulichung des erfindungsgemäßen Verfahrens.

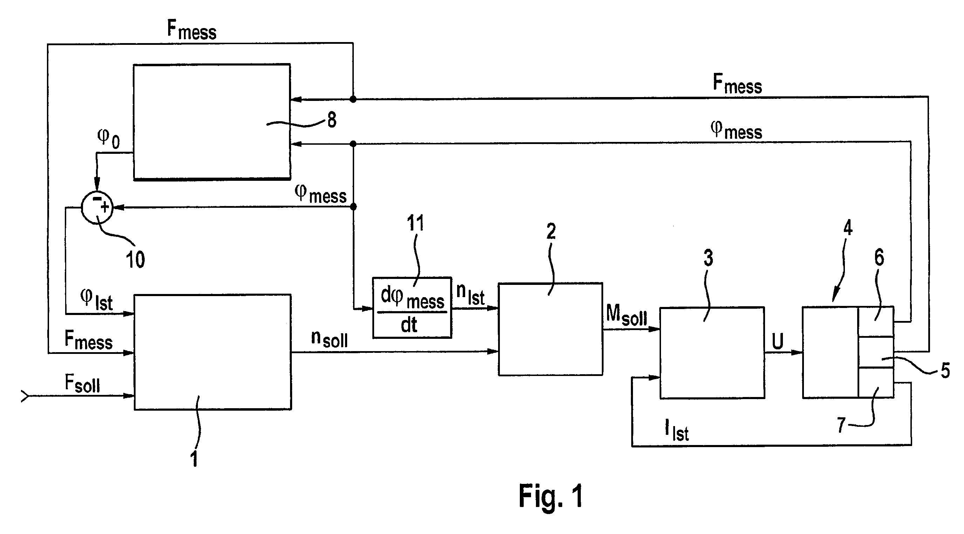

Das in Fig. 1 dargestellte Regelsystem besteht im Wesentlichen aus einem ersten Regler bzw. Kraft-Wegregler 1, einem dem Kraft-Wegregler 1 vorgeschalteten Anlegepunktidentifikationsmodul 8, einem dem Kraft-Wegregler 1 nachgeschalteten zweiten Regler bzw. Drehzahlregler 2, sowie einem dem Drehzahlregler 2 nachgeschalteten dritten Regler bzw. Stromregler 3, mit einem integrierten Servoverstärker, der eine Spannung U erzeugt, die an einen lediglich schematisch angedeuteter Aktuator 4 einer elektromechanisch betätigbaren Bremse angelegt wird. Der Aktuator 4 ist vorzugsweise mit einem Spannkraftsensor 5, einem Positionsmeßsystem bzw. einem Lagesensor 6 sowie einem Stromsensor 7 ausgestattet, wobei ein die gemessene Spannkraft repräsentierendes Ausgangssignal Fₘₑₛₛ des Spannkraftsensors 5 als eine erste Eingangsgröße dem Anlegepunktidentifikationsmodul 8 zugeführt wird und ein die gemessene Aktuatorposition repräsentierendes Ausgangssignal (ϕₘₑₛₛ des Positionsmeßsystems 6 als eine zweite Eingangsgröße dem Anlegepunktidentifikations modul 8 zugeführt wird. Das dem Aktuatorstrom-Istwert entsprechende Signal I_{Ist} des Stromsensors 7 wird als Eingangsgröße dem vorhin erwähnten Stromregler 3 zugeführt.

Außerdem ist Fig. 1 zu entnehmen, dass eine erste, einer Anlegepunktposition entsprechende Ausgangsgröße (ϕ₀ des Anlegepunktidentifikationsmoduls 8 in einer Subtraktionsstelle 10 von dem die vorhin erwähnte gemessene Aktuatorposition repräsentierenden Ausgangssignal (ϕₘₑₛₛ subtrahiert wird, wobei das Ergebnis der Subtraktion, ein Aktuatorposition-Istwert ϕ_{Ist}, als eine zweite Eingangsgröße dem Kraft-Wegregler 1 zugeführt wird. Ein vom Fahrzeugführer vorgegebener Spannkraft-Sollwert Fₛₒₗₗ bildet eine dritte Eingangsgröße des Kraft-Wegreglers 1.

Die Eingangsgrößen des Drehzahlreglers 2 bilden die Ausgangsgröße des Kraft-Wegreglers 1, die dem Aktuatordrehzahl-Sollwert nₛₒₗₗ entspricht, und ein Aktuatordrehzahl-Istwert nᵢₛₜ, der durch Differenzieren des vorhin erwähnten, der gemessenen Aktuatorposition entsprechenden Signals ϕₘₑₛₛ nach der Zeit in einem Differenzierer 11 gebildet wird. Die Ausgangsgröße des Drehzahlreglers 2 entspricht einem Sollwert Mₛₒₗₗ des vom Aktuator 4 aufgebrachten Bremsmoments.

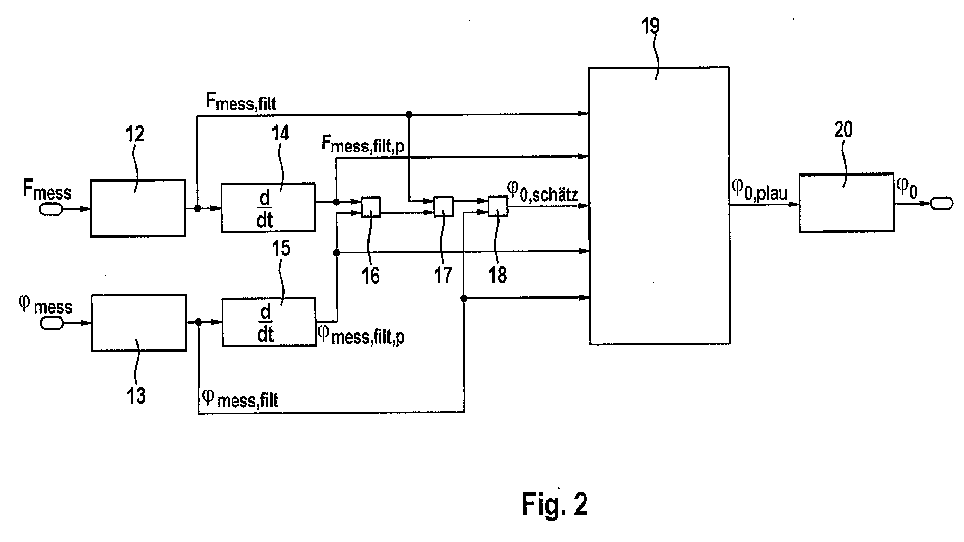

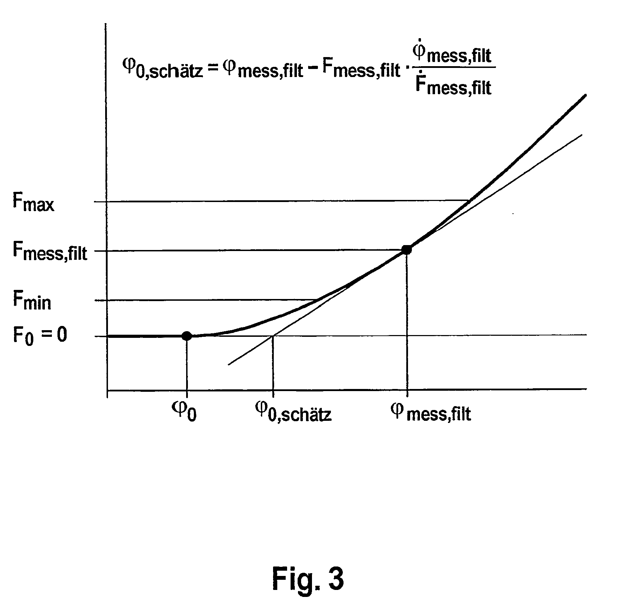

Die Funktionsweise der in Fig. 1 dargestellten Regelschaltung bzw. die Durchführung des erfindungsgemäßen Verfahrens wird im nachfolgenden Text im Zusammenhang mit Fig. 2 und 3 näher erläutert.

Wie bereits erwähnt wurde, zeigt Fig. 2 den Aufbau des Anlegepunktidentifikationsmoduls 8 mit den Eingangsgrößen Fₘₑₛₛ, ϕₘₑₛₛ. Das die gemessene Spannkraft bzw. den Istwert der Spannkraft repräsentierende Ausgangssignal Fₘₑₛₛ des Spannkraftsensors 6 wird einem ersten Tiefpassfilter 12 zugeführt, dessen Ausgangsgröße F_{mess,filt} einem ersten Differenzierer 14 zugeführt wird, in dem ihre Ableitung nach der Zeit F_{mess, filtp} gebildet wird. Das die am Aktuator 4 gemessene Aktuatorposition repräsentierendes Signal ϕₘₑₛₛ wird einem zweiten Tiefpassfilter 13 zugeführt, dessen Ausgangsgröße ϕ_{mess,filt} einem zweiten Differenzierer 15 zugeführt wird, in dem ihre Ableitung nach der Zeit ϕ_{mess,filtp} gebildet wird. Wie bereits erwähnt wurde, beruhen die Tiefpassfilterung, insbesondere aber die Bildung der zeitlichen Ableitungen der gefilterten Werte der Aktuatorposition und der Spannkraft auf einem Berechnungsalgorithmus, der eine Approximation der letzten 2n+1 Messwerte mittels eines Polynoms 2. Ordnung (f(t) = at ²+bt+c) verwendet, bei der die gefilterten Werte und ihre zeitlichen Ableitungen den Parametern des Polynoms an der Stelle n+1 entsprechen.

Die zeitlichen Ableitungen F_{mess,filtp}, ϕ_{mess,filtp} der gefilterten Größen werden zur Bildung des vorhin genannten Quotienten Q = F_{mess,filtp}/ϕ_{mess,filtp} einem ersten Multiplizierer 16 zugeführt, während in einem nachgeschalteten zweiten Multiplizierer 17 der gefilterte Wert der am Aktuator 4 gemessenen Spannkraft F_{mess,filt} durch den Quotienten Q geteilt wird. Die Ausgangsgröße des zweiten Multiplizierers 17, das Ergebnis der Division F_{mess,filt}/Q, wird in einem Additionsmodul 18 von dem gefilterten Wert der Aktuatorposition ϕ_{mess,filt} subtrahiert und in einem Plausibilisierungsmodul 19 mit den gefilterten Werten der Aktuatorposition (ϕ_{mess,filt}) und der Spannkraft (F_{mess,filt}) sowie deren zeitlichen Ableitungen (ϕ_{mess,filtp,} F_{mess,filtp}) einer Plausibilisierungsprüfung unterworfen. Liegt der diesem Schätzwert (ϕ_{0,schätz}) zugeordnete gefilterte Spannkraft-Istwert (F_{mess,filt}) innerhalb eines vordefinierten Intervalls Fₘᵢₙ < F_{mess,filt} < Fₘₐₓ, so wird der berechnete Schätzwert (ϕ_{0,schätz}) als plausibler Schätzwert (ϕ_{0,plau}) angesehen. Wenn der Quotient Q dagegen negativ ist, werden die Schätzwerte (ϕ_{0,schätz}) als unplausibel angesehen und nicht berücksichtigt. Der plausibilisierte Schätzwert (ϕ_{0,plau}) wird anschließend in einem Tiefpassfilter 20 n-ter Ordnung gefiltert, dessen Ausgangsgröße den Positionswert (ϕ₀) darstellt, der dem Anlegepunkt der ersten Reibfläche an der zweiten Reibfläche entspricht.

Fig. 3 zeigt schließlich eine diagrammatische Darstellung der Bestimmung des gesuchten Anlegepunktes ϕ₀ anhand der vorhin beschriebenen Größen ϕ_{0,schätz}, ϕ_{mess,filt} und F_{mess,filt}, wobei die eingezeichneten Werte F₀, Fₘᵢₙ und Fₘₐₓ keiner weiteren Erklärung bedürfen.

## Patentansprüche

1. Verfahren zum Aufbringen definierter Spannkräfte bei einer mittels eines Aktuators elektrisch betätigbaren Bremse mit einer ersten Reibfläche (Reibbelag) sowie einer zweiten Reibfläche (Bremsscheibe), zwischen denen ein Lüftspiel vorgesehen ist, bei der das Anlegen der ersten Reibfläche an die zweite Reibfläche ermittelt wird, bei der ein Zusammenhang zwischen der Aktuatorposition (ϕ_{Mess}) und der Spannkraft (F_{Mess}) besteht, bei dem mittels eines Spannkraftsensors sowie eines Lagesensors Ist-Werte (Fₘₑₛₛ, ϕₘₑₛₛ) der Spannkraft sowie der Aktuatorposition ermittelt werden, wobei ein Wert (ϕ₀) der Aktuatorposition ermittelt wird, der dem Anlegen der ersten Reibfläche an die zweite Reibfläche entspricht,
**dadurch gekennzeichnet, dass**
a) die Istwerte der Aktuatorposition (ϕₘₑₛₛ) und der Spannkraft (Fₘₑₛₛ) laufend tiefpass gefiltert werden,
b) zeitliche Ableitungen (ϕ_{mess, filtp}, F_{mess, filtp}) der gefilterten Werte der Aktuatorposition (ϕ_{mess,filt}) und der Spannkraft (F_{mess,filt}) ermittelt werden,
c) ein Quotient Q = F_{mess,filtp}/ϕ_{mess,filtp} gebildet wird,
d) ein Schätzwert (ϕ_{0,schätz}) der Aktuatorposition nach der Formel ϕ_{0, schätz} = ϕ_{mess,filt} - F_{mess, filt}/Q berechnet
e) der berechnete Schätzwert (ϕ_{0,schätz}) einer Plausibilitätsprüfung unterworfen wird und
f) der plausibilisierte Schätzwert (ϕ_{0,plau}) in einem Tiefpassfilter n-ter Ordnung gefiltert wird, dessen Ausgangsgröße dem Wert (ϕ₀) entspricht.

2. Verfahren nach Anspruch 1 **dadurch gekennzeichnet, dass** der berechnete Schätzwert (ϕ_{0,schätz}) nur dann als plausibler Schätzwert (ϕ_{0,plau}) angesehen wird, wenn der diesem Schätzwert (ϕ_{0,schätz}) zugeordnete gefilterte Spannkraft-Istwert (F_{mess,filt}) innerhalb eines vordefinierten Intervalls Fₘᵢₙ < F_{mess,filt} < Fₘₐₓ liegt.

3. Verfahren nach Anspruch 1 oder 2 **dadurch gekennzeichnet, dass** die Schätzwerte (ϕ_{0,shätz}) als unplausibel angesehen und nicht berücksichtigt werden, wenn der Quotient Q negativ ist.

4. Verfahren nach einem der Ansprüche 1 bis 3 **dadurch gekennzeichnet, dass** zur Tiefpassfilterung der Istwerte der Aktuatorposition (ϕₘₑₛₛ) und der Spannkraft (Fₘₑₛₛ) und Bildung der zeitlichen Ableitung der gefilterten Werte der Aktuatorposition (ϕ_{mess,filt}) und der Spannkraft (F_{mess,filt}) eine Approximation mittels eines Polynoms 2. Ordnung der letzten 2n + 1 Werte verwendet wird, bei der die gefilterten Werte und ihre zeitlichen Ableitungen den Parametern des Polynoms an der Stelle n + 1 entsprechen.

5. Regelsystem zum Aufbringen definierter Spannkräfte bei einer mittels eines Aktuators elektrisch betätigbaren Bremse mit einer ersten Reibfläche (Reibbelag) sowie einer zweiten Reibfläche (Bremsscheibe), [bei der ein Zusammenhang zwischen der Aktuatorposition (ϕ) und der Spannkraft (F) besteht und] mit einem Spannkraftsensor (5) zur Ermittlung der Spannkraft (F) sowie einem Lagesensor (6) zur Ermittlung der Aktuatorposition (ϕ), mit einem ersten Regler (1) (Kraft-Wegregler), dem als Eingangsgrößen einen Spannkraft-Sollwert (Fₛₒₗₗ) und einen Spannkraft-Istwert (Fₘₑₛₛ) sowie einen Aktuatorposition-Istwert (ϕₘₑₛₛ) repräsentierende Signale zugeführt werden und dessen Ausgangsgröße einem Aktuatordrehzahl-Sollwert (nₛₒₗₗ) entspricht, einem dem ersten Regler nachgeschalteten zweiten Regler (2) (Drehzahlregler), dem als Eingangsgrößen den Aktuatordrehzahl-Sollwert (nₛₒₗₗ) und einen Aktuatordrehzahl-Istwert (nᵢₛₜ) repräsentierende Signale zugeführt werden und dessen Ausgangsgröße einem Aktuatordrehmoment-Sollwert (Mₛₒₗₗ) entspricht, sowie einem dem zweiten Regler nachgeschalteten dritten Regler (3) (Stromregler), dem als Eingangsgrößen den Aktuatordrehmoment-Sollwert (Mₛₒₗₗ) und einen Istwert (I_{Ist}) des dem Aktuator zuzuführenden Stromes repräsentierende Signale zugeführt werden und dessen Ausgangsgröße eine Stellgröße (U) zur Einstellung des Istwerts (I_{Ist}) des dem Aktuator zuzuführenden Stromes darstellt, wobei ein Anlegepunktidentifikationsmodul (8) vorgesehen ist, dem als Eingangsgrößen den Wert der am Aktuator (4) gemessenen Position (ϕₘₑₛₛ) sowie den Istwert der am Aktuator (4) gemessenen Betätigungskraft (Fₘₑₛₛ) Ausgangsgröße einen Wert (ϕ₀) der Aktuatorposition darstellt, der dem Anlegen der ersten Reibfläche an die zweite Reibfläche entspricht, wobei das den Aktuatorposition-Istwert (ϕ_{Ist}) repräsentierende Signal durch Subtraktion des Wertes (ϕ₀) von dem Wert der gemessenen Aktuatorposition (ϕₘₑₛₛ) repräsentierenden Signal gebildet wird, **dadurch gekennzeichnet, dass** das Anlegepunktidentifikationsmodul (8) Tiefpassfilter (12, 13) n-ter Ordnung zur Tiefpassfilterung der den Istwert der am Aktuator (4) gemessenen Position (ϕₘₑₛₛ) sowie den Istwert der am Aktuator (4) gemessenen Betätigungskraft (Fₘₑₛₛ) repräsentierenden Signale aufweist, denen Differenzierer (14, 15) zur Bildung der zeitlichen Ableitung der gefilterten Signale der Aktuatorposition (ϕ_{mess,filt}) und der Spannkraft (F_{mess,filt}) nachgeschaltet sind, deren Ausgangsgrößen (ϕ_{mess,filtp,} F_{mess,filtp}) einem ersten Multiplikationssmodul (16)) zur Berechnung eines Quotienten Q = F_{mess,filtp}/ϕ_{mess,filtp} zugeführt werden, dem ein zweites Multiplikationssmodul (17) nachgeschaltet ist, in dem der gefilterte Wert der Spannkraft (F_{mess, filt}) durch den Quotienten Q geteilt wird und dem ein Additionssmodul (18) nachgeschaltet ist, in dem der Schätzwert (ϕ_{0,schätz}) der Aktuatorposition nach der Formel (ϕ_{0, schätz} = ϕ_{mess,filt} - F_{mess, filt}/Q berechnet wird.

6. Regelsystem nach Anspruch 5 **dadurch gekennzeichnet, dass** dem Additionssmodul (18) ein Plausibilisierungsmodul (19) nachgeschaltet ist, in dem der geschätzte Schätzwert (ϕ_{0,schätz}) mit den gefilterten Werten der Aktuatorposition (ϕ_{mess, filt}) und der Spannkraft (F_{mess,filt}) sowie deren zeitlichen Ableitungen (ϕ_{mess,filtp}, F_{mess,filtp}) einer Plausibilitätsprüfung unterworfen wird.

7. Regelsystem nach Anspruch 6 **dadurch gekennzeichnet, dass** dem Plausibilisierungsmodul (19) ein Tiefpassfilter (20) n-ter Ordnung nachgeschaltet ist, in dem der geschätzte plausibilisierte Schätzwert (ϕ_{0,plau}) zur Bildung des Werts (ϕ₀) der Aktuatorposition einer Tiefpassfilterung unterworfen wird.

## Claims

1. Method for applying defined clamping forces in a brake that is electrically operable by means of an actuator and includes a first friction surface (friction lining) and a second friction surface (brake disc), in between which a clearance is allowed, where the application of the first friction surface on the second friction surface is determined, where a correlation exists between the actuator position (ϕₘₑₐₛ) and the clamping force (Fₘₑₐₛ), wherein actual values (Fₘₑₐₛ, ϕₘₑₐₛ) of the clamping force as well as of the actuator position are determined by means of a clamping force sensor and a position sensor, with a value ((ϕ₀) of the actuator position being determined which corresponds to the application of the first friction surface on the second friction surface,
**characterized in that**
a) the actual values of the actuator position (ϕₘₑₐₛ) and of the clamping force (Fₘₑₐₛ) continuously undergo low-pass filtering,
b) time derivatives (ϕ_{meas,filtp}, F_{meas,filtp}) of the filtered values of the actuator position (ϕ_{meas,filt} ) and the clamping force (F_{meas,filt}) are determined,
c) a quotient Q = F_{meas, filtp}/ϕ_{meas,filtp} is produced,
d) an assessed value (ϕ_{0,assess}) of the actuator position is calculated according to the formula ϕ_{0, assess} = ϕ_{meas, filt} - F_{meas, filt}/Q,
e) the calculated assessed value (ϕ_{0,assess}) is subjected to a plausibility check, and
f) the plausibilised assessed value (ϕ_{0,plau}) is filtered in a low-pass filter of nth order, the output quantity of which corresponds to the value (ϕ₀).

2. Method as claimed in claim 1,
**characterized in that** the calculated assessed value (ϕ_{0,assess}) is considered as being a plausible assessed value (ϕ_{0,plau}) only if the filtered clamping force actual value (F_{meas,filt}) associated with this assessed value (ϕ_{0,assess}) lies within a predefined interval Fₘᵢₙ < _{Fmeas},_{filt} < Fₘₐₓ.

3. Method as claimed in claim 1 or 2,
**characterized in that** the assessed values (ϕ_{0,assess}) are regarded as implausible and are not considered when the quotient Q is negative.

4. Method as claimed in any one of claims 1 to 3,
**characterized in that** for low-pass filtering of the actual values of the actuator position (ϕₘₑₐₛ) and the clamping force (Fₘₑₐₛ) and for producing the time derivatives of the filtered values of the actuator position (ϕ_{meas,filt}) and the clamping force (F_{meas,filt}), an approximation by means of a polynomial of second order of the last 2n+1 values is used, in which the filtered values and their time derivatives correspond to the parameters of the polynomial at the point n + 1.

5. Control system for applying defined clamping forces in a brake that is electrically operable by means of an actuator and includes a first friction surface (friction lining) and a second friction surface (brake disc), wherein a correlation exists between the actuator position (ϕ) and the clamping force (F), and including a clamping force sensor (5) for determining the clamping force (F) and a position sensor (6) for determining the actuator position (ϕ), including a first controller (1) (force-travel controller), to which signals representative of a clamping force nominal value (Fₙₒₘᵢₙₐₗ) and a clamping force actual value (Factual) and signals representative of an actuator position actual value (ϕₘₑₐₛ) are sent as input quantities, and the output quantity of which controller corresponds to an actuator speed nominal value (nₙₒₘᵢₙₐₗ), a second controller (2) (speed controller) that is connected downstream of the first controller and to which signals representative of the actuator speed nominal value (nₙₒₘᵢₙₐₗ) and an actuator speed actual value (n_{actual}) are sent as input quantities, and the output quantity of which controller corresponds to an actuator torque nominal value (Mₙₒₘᵢₙₐₗ), as well as a third controller (3) (current controller) that is connected downstream of the second controller and to which signals representative of the actuator torque nominal value (Mₙₒₘᵢₙₐₗ) and an actual value (I_{actual}) of the current to be supplied to the actuator are sent as input quantities, and the output quantity of which controller represents a correcting variable (U) for adjusting the actual value (I_{actual}) of the current to be supplied to the actuator, and an application-point identification module (8) is provided, to which signals representative of the actual value of the position (ϕₘₑₐₛ) measured at the actuator (4) and the actual value of the actuating force (Fₘₑₐₛ) measured at the actuator (4) are sent as input quantities, and the output quantity of which represents a value (ϕ₀) of the actuator position, which corresponds to the application of the first friction surface on the second friction surface, with the signal representative of the actuator position actual value (ϕ_{actual}) being produced by subtraction of the value (ϕ₀) from the signal representative of the value of the measured actuator position (ϕₘₑₐₛ),
**characterized in that** the application-point identification module (8) includes low-pass filters (12, 13) of nth order for low-pass filtering of signals representative of the actual value of the position (ϕₘₑₐₛ) measured at the actuator (4) and the actual value of the actuating force (Fₘₑₐₛ) measured at the actuator (4), and differentiators (14, 15) are connected downstream of the low-pass filters for producing the time derivative of the filtered signals of the actuator position (ϕ_{meas, filt}) and the clamping force (F_{meas,filt}), the output quantities of which (ϕ_{meas,filtp}, F_{meas,filtp}) are sent to a first multiplication module (16) for calculating a quotient Q = F_{meas,filtp}/ϕ_{meas,filtp}, connected downstream of the latter is a second multiplication module (17) in which the filtered value of the clamping force (F_{meas,filt}) is divided by the quotient Q, and connected downstream of which is an addition module (18) in which the assessed value (ϕ_{0, assess}) of the actuator position is calculated according to the formula (ϕ₀, assess = ϕ_{meas,filt} - F_{meas,filt}/Q).

6. Control system as claimed in claim 5,
**characterized in that** connected downstream of the addition module (18) is a plausibilisation module (19) in which the assessed value (ϕ_{0,assess}) together with the filtered values of the actuator position (ϕ_{meas,filt}) and the clamping force (F_{meas,filt}) and their time derivatives (ϕ_{meas,filtp,} F_{meas,filtp}) are subjected to a plausibility check.

7. Control system as claimed in claim 6,
**characterized in that** the plausibilisation module (19) is succeeded by a low-pass filter (20) of nth order, in which the plausibilised assessed value (ϕ_{0,plau}) undergoes a low-pass filtering operation for producing the value (ϕ₀) of the actuator position.

## Revendications

1. Procédé pour appliquer des forces de serrage définies dans un frein qui peut être actionné de manière électrique au moyen d'un actionneur et qui présente une première surface de friction (garniture de friction) ainsi qu'une seconde surface de friction (disque de frein) entre lesquelles est prévu un jeu, dans lequel l'application de la première surface de friction contre la seconde surface de friction est déterminée, dans lequel il existe une relation entre la position de l'actionneur (ϕ_{Mess}) et la force de freinage (F_{Mess}), dans lequel au moyen d'un capteur de force de serrage ainsi que d'un capteur de position sont déterminées des valeurs réelles (Fₘₑₛₛ, ϕₘₑₛₛ) de la force de serrage et de la position de l'actionneur, une valeur (ϕ₀) de la position de l'actionneur étant déterminée qui correspond à l'application de la première surface de friction contre la seconde surface de friction, **caractérisé en ce que**
a) des valeurs réelles de la position de l'actionneur (ϕₘₑₛₛ) et de la force de serrage (Fₘₑₛₛ) sont filtrées en permanence par un passe-bas,
b) des dérivées temporelles (ϕ_{mess,filtp,}F_{mess,filtp}) des valeurs filtrées de la position de l'actionneur (ϕ_{mess,filt}) et de la force de serrage (F_{mess,filt}) sont déterminées,
c) un quotient Q = F_{mess,filtp}/ϕ_{mess,filtp} est formé,
d) une valeur d'estimation (ϕ_{0,schätz}) de la position de l'actionneur est calculée selon la formule ϕ_{0, schätz} = ϕ_{mess, filt} - F_{mess, filt}/Q,
e) la valeur d'estimation calculée (ϕ_{0, schätz}) est soumise à une vérification de plausibilité et
f) la valeur d'estimation plausible (ϕ₀,ₚₗₐᵤ) est filtrée dans un filtre passe-bas de n^{ième} ordre dont la grandeur de sortie correspond à la valeur (ϕ₀).

2. Procédé selon la revendication 1, **caractérisé en ce que** la valeur d'estimation calculée (ϕ_{0,schätz}) n'est considérée comme valeur d'estimation plausible (ϕ_{0,plau}) que si la valeur réelle de la force de serrage filtrée (F_{mess,filt}) , associée à cette valeur d'estimation (ϕ_{0,schätz}), se situe à l'intérieur d'un intervalle Fₘᵢₙ < F_{mess,filt} < Fₘₐₓ prédéfini.

3. Procédé selon la revendication 1 ou 2, **caractérisé en ce que** les valeurs d'estimation (ϕ_{0,schätz}) sont considérées comme non plausibles et ne sont pas prises en compte si le quotient Q est négatif.

4. Procédé selon l'une des revendications 1 à 3, **caractérisé en ce que** pour le filtrage passe-bas des valeurs réelles de la position de l'actionneur (ϕₘₑₛₛ) et de la force de serrage (Fₘₑₛₛ) et la formation de la dérivée temporelle des valeurs filtrées de la position de l'actionneur (ϕ_{mess,filt}) et de la force de serrage (F_{mess,filt}) on utilise une approximation au moyen d'un polynôme de 2ème ordre des 2n+1 dernières valeurs, pour laquelle les valeurs filtrées et leurs dérivées temporelles correspondent aux paramètres du polynôme à l'emplacement n+1.

5. Système de régulation pour appliquer des forces de serrage définies dans un frein pouvant être actionné de manière électrique au moyen d'un actionneur et qui présente une première surface de friction (garniture de friction) ainsi qu'une seconde surface de friction (disque de frein), [dans lequel il existe une relation entre la position de l'actionneur (ϕ) et la force de serrage (F) et] comportant un capteur de force de serrage (5) pour déterminer la force de serrage (F) ainsi qu'un capteur de position (6) pour déterminer la position de l'actionneur (ϕ), comportant un premier régulateur (1) (régulateur force-course) auquel sont amenés en tant que grandeurs d'entrée des signaux représentant une valeur de consigne de force de serrage (Fₛₒₗₗ) et une valeur réelle de force de serrage (Fₘₑₛₛ) ainsi qu'une valeur réelle de position d'actionneur (ϕₘₑₛₛ), et dont la grandeur d'entrée correspond à une valeur de consigne de vitesse de rotation d'actionneur nₛₒₗₗ, un deuxième régulateur (2) (régulateur de vitesse de rotation) couplé en aval du premier régulateur auquel sont amenés en tant que grandeurs d'entrée des signaux représentant la valeur de consigne de vitesse de rotation d'actionneur nₛₒₗₗ ainsi qu'une valeur réelle de vitesse de rotation d'actionneur nᵢₛₜ et dont la grandeur d'entrée correspond à une valeur de consigne de couple de rotation d'actionneur Mₛₒₗₗ, et comportant un troisième régulateur (3) (régulateur de courant) couplé en aval du deuxième régulateur, auquel sont amenés en tant que grandeurs d'entrée des signaux représentant la valeur de consigne de couple de rotation d'actionneur (Mₛₒₗₗ) et une valeur réelle (Iᵢₛₜ) du courant à amener à l'actionneur, et dont la grandeur de sortie constitue une grandeur de réglage (U) pour régler la valeur réelle (Iᵢₛₜ) du courant à amener à l'actionneur, un module d'identification de point d'application (8) étant prévu auquel sont amenés en tant que grandeurs d'entrée des signaux représentant la valeur de la position (ϕₘₑₛₛ) mesurée sur l'actionneur (4) ainsi que la valeur réelle de la force d'actionnement (Fₘₑₛₛ) mesurée sur l'actionneur (4), et dont la grandeur de sortie constitue une valeur (ϕ₀) de la position de l'actionneur qui correspond à l'application de la première surface de friction contre la seconde surface de friction, le signal représentant la valeur réelle de position d'actionneur (ϕₚᵢₛₜ) étant formé par soustraction de la valeur (ϕ₀), du signal représentant la valeur de la position d'actionneur mesurée (ϕₘₑₛₛ), **caractérisé en ce que** le module d'identification de point d'application (8) comporte des filtres passe-bas (12, 13) de n^{ième} ordre pour la filtration passe-bas des signaux représentant la valeur réelle de la position (ϕₘₑₛₛ) mesurée sur l'actionneur (4) ainsi que la valeur réelle de la force d'actionnement (Fₘₑₛₛ) mesurée sur l'actionneur (4), en aval desquels sont couplés des différenciateurs (14, 15) pour former la dérivée dans le temps des signaux filtrés de la position d'actionneur (ϕ_{mess,filt}) et de la force de serrage (F_{mess,filt}), dont les grandeurs de sortie (ϕ_{mess, filtp}, F_{mess, filtp}) sont amenées à un premier module de multiplication (16) pour le calcul d'un quotient (Q = F_{mess,filtp}/ϕ_{mess,filtp}) en aval duquel est couplé un second module de multiplication (17) dans lequel la valeur filtrée de la force de serrage (F_{mess,filt}) est divisée par le quotient (Q) et en aval duquel est couplé un module d'addition (18) dans lequel la valeur d'estimation (ϕ_{0,schätz}) de la position de l'actionneur est calculée suivant la formule ϕ_{0,schätz} = ϕ_{mess,filt} - F_{mess,filt}/Q.

6. Système de régulation selon la revendication 5, **caractérisé en ce qu'**en aval du module d'addition (18) est couplé un module de plausibilité (19) dans lequel la valeur d'estimation estimée (ϕ_{0,schätz}) est soumise à une vérification de plausibilité avec les valeurs filtrées de la position de l'actionneur (ϕ_{mess,filt}) et de la force de serrage (F_{mess,filt}) ainsi qu'avec leurs dérivées temporelles (ϕ_{mess, filtp}, F_{mess,filtp}).

7. Système de régulation selon la revendication 6, **caractérisé en ce qu'**en aval du module de plausibilité (19) est couplé un filtre passe-bas (20) de n^{ième} ordre dans lequel la valeur d'estimation plausible estimée (ϕ₀,ₚₗₐᵤ) est soumise à un filtrage passe-bas pour former la valeur (ϕ₀) de la position de l'actionneur.
